# EUROPÄISCHE PATENTSCHRIFT

(11) **EP 2 019 283 B1**
(45) Veröffentlichungstag und Bekanntmachung des Hinweises auf die Patenterteilung: **04.03.2020**
(21) Anmeldenummer: 08012951.3
(22) Anmeldetag: 17.07.2008
(51) Int. Cl.: G01B 21/04

(54) **Verfahren und Vorrichtung zur Vermessung von Ist-Messdaten eines Bauteils**
Method and device for measuring actual data on a component
Procédé et dispositif de mesure des données de mesure réelles d'un composant

(30) Priorität: 23.07.2007 DE 102007034168
(43) Veröffentlichungstag der Anmeldung: 28.01.2009
(73) Patentinhaber: Carl Zeiss Optotechnik GmbH, 83115 Neubeuern (DE)
(72) Erfinder: Prams, Matthias, Dipl.-Ing., 83101 Rohrdorf (DE); Gandyra, Michael, Dr.-Ing., 83022 Rosenheim (DE); Apanovich, Roman, Dipl.-Ing., 83059 Kolbermoor (DE)
(74) Vertreter: Zinnecker, Armin

(56) Entgegenhaltungen:
- US-A1- 2005 151 963
- US-A1- 2005 166 413
- WILHELM ET AL: "Task Specific Uncertainty in Coordinate Measurement", CIRP ANNALS, ELSEVIER BV, NL, CH, FR, Bd. 50, Nr. 2, 1. Januar 2001 (2001-01-01) , Seiten 553-563, XP022145005, ISSN: 0007-8506, DOI: 10.1016/S0007-8506(07)62995-3

## Beschreibung

Die Erfindung betrifft ein Verfahren zur Überprüfung eines Bauteils, bei dem die Ist-Messdaten des Bauteils mittels einer optischen Abtastung ermittelt werden, und eine Vorrichtung zur Durchführung eines derartigen Verfahrens. Das erfindungsgemäße Verfahren und die erfindungsgemäße Vorrichtung werden zum Überprüfen von Bauteilen eingesetzt. Zum Überprüfen von Bauteilen sind bereits verschiedene Verfahren bekannt.

Bei einem herkömmlichen und weit verbreiteten Verfahren zur Vermessung, Inspektion und Überprüfung von Bauteilen wird ein physisches Bauteil mittels eines Koordinatenmeßgeräts untersucht, wobei diese Untersuchung meist automatisiert durchgeführt wird. Das physische Bauteil wird mit einem Meßtaster taktil angetastet, die Ist-Meßdaten werden ermittelt und die Abweichungen zu den Soll-Daten werden festgestellt. Derartige taktile Meßgeräte sind insbesondere in der Industrie weit verbreitet. Bei der Vermessung eines Bauteils mit einem taktil tastenden Koordinaten-Meßgerät, das auch als Koordinaten-Meßmaschine bezeichnet werden kann, werden üblicherweise nur wenige interessierende Meßpunkte der Oberfläche des Bauteils bzw. des zu prüfenden Objekts angefahren und die entsprechenden Meßdaten ermittelt, beispielsweise ein Lochdurchmesser oder eine Lochposition, bestimmte Funktionsmaße, bestimmte Abstände und ähnliches. Da die taktile Vermessung verhältnismäßig zeitaufwendig ist, wird üblicherweise nicht das gesamte Bauteil bzw. Objekt vermessen bzw. erfaßt, sondern nur diejenigen Teile oder Einzelmaße des Bauteils, die von besonderem Interesse sind.

Ein weiteres bekanntes Verfahren besteht darin, ein Bauteil optisch zu vermessen. Nach diesem Verfahren wird das Bauteil optisch abgetastet, insbesondere mittels eines optischen Scanners. Üblicherweise wird das Bauteil bei der optischen Meßtechnik "ganzflächig" abgetastet und erfaßt. Dadurch werden Ist-Meßdaten des Bauteils ermittelt. Der Datensatz der Ist-Meßdaten bildet ein virtuelles Abbild des physischen Bauteils in Form seiner Oberflächenpunkte, wobei die Oberflächenpunkte üblicherweise als 3D-Koordinaten erfaßt werden. Dieser Datensatz der Ist-Meßdaten, also das virtuelle Bauteil, kann an einem Bildschirm visualisiert werden. Der Datensatz der Ist-Meßdaten kann ferner weiterverarbeitet bzw. bearbeitet werden. Mit Hilfe von spezieller Auswertungs-Software, sogenannter Inspektions-Software, können die Ist-Meßdaten vermessen werden. Hierdurch können bestimmte Maße in dem virtuellen Bauteil ermittelt werden. Diese Maße beruhen auf den Ist-Meßdaten, aus denen das virtuelle Bauteil gebildet wird. Sie können mit den Soll-Daten des jeweiligen Maßes verglichen werden. Auf diese Weise können alle Maße, die an dem physischen Bauteil taktil "abgegriffen" werden können, in gleicher Weise durch geeignete Algorithmen aus dem Datensatz der Ist-Meßdaten bestimmt werden. Gegenwärtig werden Bauteile zunehmend auch mit optischer Meßtechnik vermessen, da die optische Meßtechnik mittlerweile gegenüber der taktilen Meßtechnik bezüglich der Meßgenauigkeit aufgeholt hat und mit der optischen Meßtechnik auch eine hundertprozentige Prüfung eines Bauteils erfolgen kann. Mit der optischen Meßtechnik kann auch ein vollflächiger Vergleich des Bauteils durchgeführt werden. Ferner sind bei der optischen Meßtechnik die Meßzeiten geringer.

Die auf dem Markt verfügbaren Geräte und Systeme zur optischen Abtastung von Oberflächen basieren auf dem Prinzip der reinen Koordinatenmessung. Dies bedeutet, daß meistens Punktwolken gemessen werden. Diese Punktwolken können in einem anschließenden Prozeß ausgedünnt, gefiltert und vernetzt werden, um die Menge der Punkte (meistens mehrere Millionen) zu reduzieren, wobei der Informationsgehalt nicht oder nur geringfügig vermindert wird. Auf der Basis dieses Datensatzes kann dann unter Verwendung eines Computers und einer Inspektions-Software eine Inspektion durchgeführt werden. Für diese Inspektion werden aus dem Datensatz der Ist-Meßwerte bestimmte Maße ermittelt, die mit den zugehörigen Soll-Daten verglichen werden.

Aus der DE 199 25 462 C1 ist ein Verfahren zur Vermessung von Ist-Meßdaten eines Bauteils, die aus einer optischen Abtastung stammen, bekannt. Bei diesem Verfahren werden Meßmarken auf einem dreidimensionalen Körper angebracht. In einer Datenverarbeitungseinheit ist ein 3D-Soll-Datensatz der Oberfläche des dreidimensionalen Körpers gespeichert. Zwischen den gespeicherten Soll-Daten und den gemessen Ist-Daten wird ein Soll-Ist-Vergleich durchgeführt. Die im 3D-Soll-Datensatz definierten Oberflächen-Referenzpunkte werden auf den dreidimensionalen Körper übertragen, wobei diese übertragenen Referenzpunkte dann Positionsvorgaben für die Anbringung der Meßmarken darstellen.

Die DE 43 20 485 offenbart ein Verfahren zur Objektvermessung mittels einer Entfernungsbildkamera.

Aus der DE 10 2004 061 338 A1 ist ein Verfahren zum Prüfen eines Bauteils bekannt, bei dem das Bauteil mit einem Prüfsensor, dessen Position erfaßt wird, geprüft wird.

Die US 2005/166413 A1 offenbart ein Koordinatenmessgerät, das einen taktilen Taster oder ein optisches Abtastgerät zum Ermitteln der Ist-Messdaten eines Bauteils aufweist.

Aus der US 2005/151963 A1 ist ein weiteres Koordinatenmessgerät mit einem taktilen Taster und einem optischen Abtastgerät zum Ermitteln der Ist-Messdaten eines Bauteils bekannt.

Die Literaturstelle WILHELM ET AL:"Task Specific Uncertainty in Coordinate Measurement", CIRP ANNALS, ELSEVIER BV, NL, CH, FR, Bd. 50, Nr. 2, 1. Januar 2001 offenbart ein Verfahren zur Ermittlung der Messunsicherheiten, die entstehen, wenn ein bestimmtes Merkmal eines Bauteils mit einer Koordinatenmessmaschine gemessen wird.

Aufgabe der Erfindung ist es, ein verbessertes Verfahren zur Vermessung von Ist-Meßdaten eines Bauteils und eine verbesserte Vorrichtung zur Durchführung eines derartigen Verfahrens vorzuschlagen.

Erfindungsgemäß wird diese Aufgabe durch die Merkmale des Anspruchs 1 gelöst. Bei einem Verfahren zur Überprüfung eines Bauteils, bei dem die Ist-Messdaten des Bauteils mittels einer optischen Abtastung ermittelt werden, werden die Ist-Meßdaten des Bauteils mittels eines Meßprogramms für ein taktil tastendes Koordinatenmeßgerät vermessen, wobei das Meßprogramm einen virtuellen Meßtaster eines virtuellen Koordinatenmeßgeräts erzeugt, der die Ist-Meßdaten des Bauteils vermißt.

Zum Vermessen dieser Ist-Meßdaten des Bauteils wird ein Meßprogramm für ein Koordinatenmeßgerät verwendet. Insbesondere können Meßprogramme für taktile Koordinatenmeßgeräte verwendet werden, die bereits erstellt worden sind. Durch die Erfindung wird es ermöglicht, Meßprogramme für taktile Koordinatenmeßgeräte für die optische Meßtechnik nutzbar zu machen und auf die Ist-Meßdaten, die durch eine optische Abtastung ermittelt worden sind, anzuwenden. Im Endergebnis kann ein Meßprogramm für ein taktiles Koordinatenmeßgerät, insbesondere ein bereits bewährtes Meßprogramm für ein taktiles Koordinatenmeßgerät durchgeführt werden, ohne daß dieses Koordinatenmeßgerät selbst eingesetzt werden muß. Auf diese Weise werden die Vorteile der taktilen Meßtechnik und der optischen Meßtechnik vereint: Das Bauteil wird auf optische Weise in verhältnismäßig kurzer Zeit ganzflächig erfaßt, und die dadurch erzeugten Ist-Meßdaten werden durch ein Meßprogramm für ein Koordinatenmeßgerät, insbesondere durch ein bereits erstelltes, bewährtes Meßprogramm für ein Koordinatenmeßgerät vermessen, ohne daß dafür das verhältnismäßig langsame Koordinatenmeßgerät physisch eingesetzt werden muß.

Bei den Ist-Meßdaten im Sinne der Erfindung handelt es sich um die Ist-Meßdaten eines Bauteils, die durch eine optische Abtastung ermittelt werden. Das Meßprogramm des taktilen Koordinatenmeßgeräts liegt insbesondere in Form einer Software vor.

Die genauen Merkmale des erfindungsgemäßen Verfahrens sind im unabhängigen Anspruch 1 definiert. Vorteilhafte Weiterbildungen des Verfahrens sind in den abhängigen Ansprüchen 2-11 definiert.

Eine weitere vorteilhafte Weiterbildung ist dadurch gekennzeichnet, daß die Ist-Meßdaten als Punktwolke, als vernetzte kartesische Punkte und/oder als Scanlinien vorliegen oder ermittelt werden.

Die Ist-Meßdaten können interaktiv vermessen werden.

Es ist allerdings auch möglich, die Ist-Meßdaten automatisiert zu vermessen.

Die Ist-Meßdaten können mittels eines standardisierten Datenformats vermessen werden. Insbesondere können die Ist-Meßdaten mittels eines standardisierten Datenformats automatisiert vermessen werden.

Nach einer weiteren vorteilhaften Weiterbildung werden die Meßergebnisse an einem Bildschirm ausgegeben bzw. angezeigt. Stattdessen oder zusätzlich können die Meßergebnisse allerdings auch in eine Datei ausgegeben werden, insbesondere zur Weiterverarbeitung.

Vorteilhaft ist es, wenn die Meßergebnisse mit Soll-Daten verglichen werden. Die Vergleichsergebnisse können in Tabellenform und/oder in graphischer Form ausgegeben und/oder angezeigt bzw. dargestellt werden. Es ist möglich, die Vergleichsergebnisse an einem Bildschirm auszugeben bzw. anzuzeigen und/oder in eine Datei, insbesondere zur Weiterverarbeitung, auszugeben.

Eine erfindungsgemäße Vorrichtung ist eingerichtet zur Durchführung des erfindungsgemäßen Verfahrens. Die Vorrichtung umfaßt dabei ein optisches Abtastgerät zum Ermitteln der Ist-Meßdaten des Bauteils und ein Datenverarbeitungsgerät, insbesondere einen PC oder sonstigen Computer, in dem ein Meßprogramm eines taktil tastenden Koordinatenmeßgeräts zum Vermessen dieser Ist-Meßdaten vorhanden ist, wobei das Meßprogramm einen virtuellen Meßtaster eines virtuellen Koordinatenmeßgeräts erzeugt, der die Ist-Meßdaten des Bauteils vermißt.

Die genauen Merkmale der erfindungsgemäßen Vorrichtung sind im unabhängigen Anspruch 12 definiert. Vorteilhafte Weiterbildungen des Verfahrens sind in den abhängigen Ansprüchen 13-15 definiert.

Bei dem optischen Abtastgerät handelt es sich vorzugsweise um einen Scanner. Der Scanner kann ein handgehaltener bzw. handgeführter Scanner sein.

Eine weitere vorteilhafte Weiterbildung ist dadurch gekennzeichnet, daß in dem Datenverarbeitungsgerät ein Vergleichsprogramm zum Vergleichen der Ergebnisse des Meßprogramms mit Soll-Daten vorhanden ist.

Nach einer weiteren vorteilhaften Weiterbildung ist ein Bildschirm zum Ausgeben bzw. Anzeigen der Meßergebnisse des Meßprogramms und/oder der Vergleichsergebnisse des Vergleichsprogramms vorhanden.

Ausführungsbeispiele der Erfindung und vorbekannter Verfahren und Vorrichtungen werden anhand der beigefügten Zeichnung im einzelnen erläutert. In der Zeichnung zeigt
- Abb. 1: den Ablauf einer Bauteil-Inspektion durch ein optisches Meßgerät,
- Abb. 2: ein Meßprotokoll, das nach dem Verfahren der Abb. 1 entstanden ist,
- Abb. 3: verschiedene Koordinaten-Meßgeräte in perspektivischen Darstellungen,
- Abb. 4: den Meßtaster eines Koordinaten-Meßgeräts nach Abb. 3,
- Abb. 5: den Ablauf einer nach dem erfindungsgemäßen Verfahren durchgeführten Vermessung und
- Abb. 6: eine schematische Darstellung des erfindungsgemäßen Verfahrens.

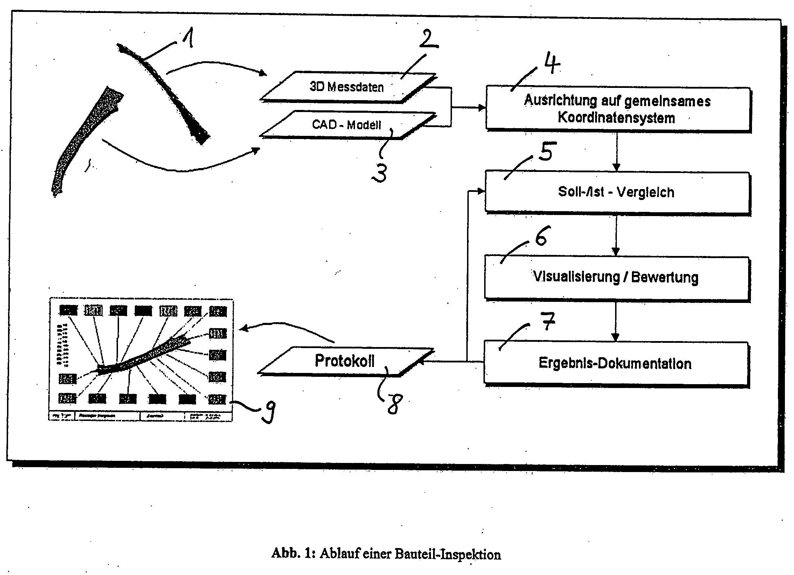

Abb. 1 zeigt den bekannten Ablauf einer Bauteil-Inspektion durch ein bekanntes optisches Meßgerät in einer schematischen Darstellung. Das Bauteil 1, bei dem es sich um ein Blechteil eines Kraftfahrzeugs handelt, wird mittels eines handgehaltenen Scanners (in der Zeichnung nicht dargestellt) optisch abgetastet. Hierdurch werden die Ist-Meßdaten dieses Bauteils 1 ermittelt. Sie werden als 3D-Meßdaten 2 in einem Computer gespeichert. Die Ist-Meßdaten bilden eine Punktwolke, die in einem anschließenden Prozeß ausgedünnt, gefiltert und vernetzt werden können, um die Menge der Punkte (meist mehrere Millionen) zu reduzieren.

In dem Computer sind ferner die Soll-Daten des Bauteils als CAD-Modell 3 gespeichert.

Nach dem vorbekannten Verfahren der Abb. 1 werden die 3D-Meßdaten 2 und das CAD-Modell 3 in einem Schritt 4 auf ein gemeinsames Koordinatensystem ausgerichtet. Im Schritt 5 wird ein Soll-Ist-Vergleich durchgeführt, bei dem die 3D-Meßdaten 2, also die Ist-Meßdaten, mit dem CAD-Modell 3, also den Soll-Daten, verglichen werden. Im Schritt 6 werden die Ergebnisse visualisiert und bewertet. Im Schritt 7 werden die Ergebnisse dokumentiert. Das Ergebnis wird durch ein Protokoll 8 festgehalten. Das Protokoll 8 kann auf einem Bildschirm als Bild 9 ausgegeben werden.

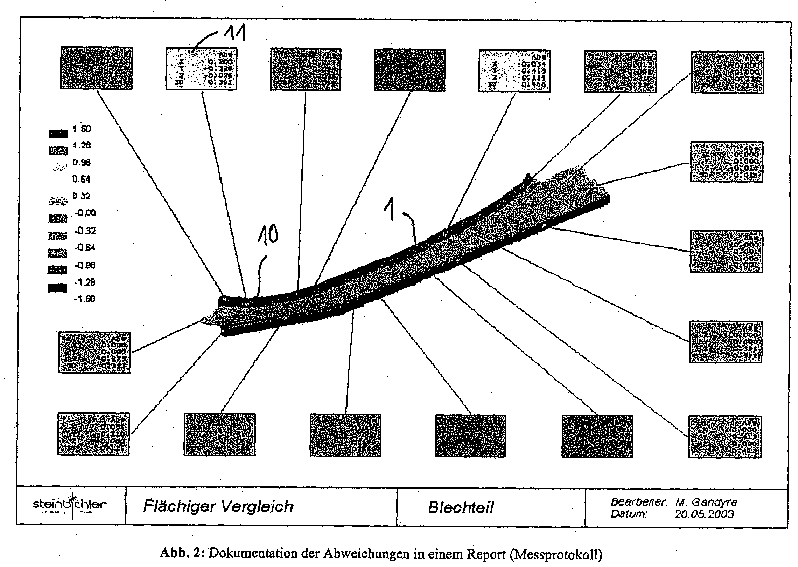

Abb. 2 zeigt eine vergrößerte Darstellung des Bildes 9 der Abb. 1. Dort werden die Werte für verschiedene Bestandteile des Bauteils 1 ausgegeben. Beispielsweise befindet sich im linken oberen Endbereich des Bauteils 1 ein Loch 10, dessen Lage durch drei räumliche Koordinaten festgelegt ist. Im Anzeigefeld 11 werden die Abweichungen der Ist-Koordinaten von den Soll-Koordinaten wiedergegeben, und zwar sowohl für die horizontale x-Koordinate, die horizontale y-Koordinate und die vertikale z-Koordinate. Dieselben Angaben werden für die weiteren interessierenden Punkte des Bauteils 1 wiedergegeben.

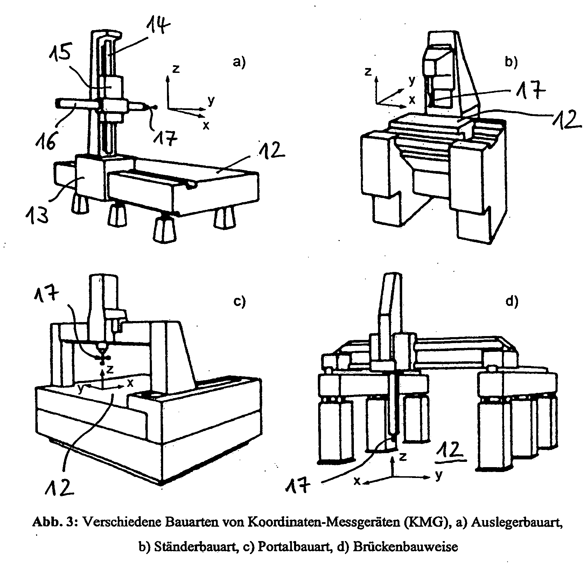

Abb. 3 zeigt verschiedene bekannte Koordinaten-Meßgeräte in perspektivischen Darstellungen.

In Abb. 3a ist ein Koordinaten-Meßgerät in Auslegerbauart gezeigt. Auf einem Meßtisch 12 kann ein Aufbau 13 in x-Richtung verfahren werden. Der Aufbau 13 umfaßt eine vertikale Führung 14, längs der ein Schlitten 15 in vertikaler z-Richtung verfahren werden kann. An dem Schlitten 15 ist eine Führungsstange 16 in horizontaler y-Richtung, die rechtwinkelig zur horizontalen x-Richtung verläuft, verfahrbar. Am Ende der Führungsstange 16 befindet sich ein Meßtaster 17 mit einer Meßspitze.

Abb. 3b zeigt ein Koordinaten-Meßgerät in Ständerbauart, bei dem der Meßtaster 17 ebenfalls in x-, y- und z-Richtung über einem Meßtisch 12 verfahrbar ist.

Abb. 3c zeigt ein Koordinaten-Meßgerät in Portalbauart. Auch hier ist der Meßtaster 17 in allen drei Raumrichtungen über dem Meßtisch 12 verfahrbar.

In Abb. 3d ist ein Koordinaten-Meßgerät in Brückenbauweise gezeigt. Der Meßtaster 17 ist in allen drei Raumrichtungen über der den Meßtisch 12 bildenden Ebene verfahrbar.

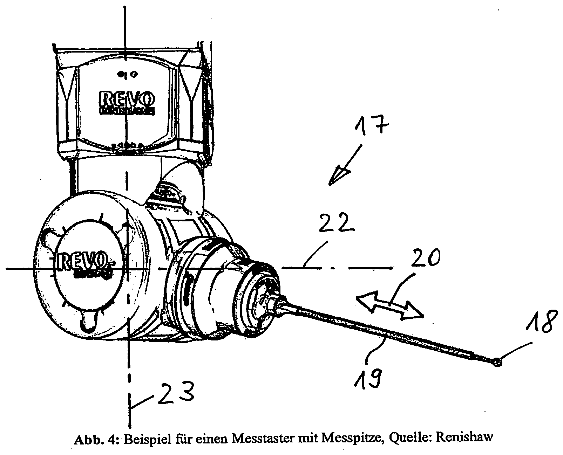

Abb. 4 zeigt den Meßtaster 17 in einer vergrößerten Darstellung. Er weist eine Meßspitze 18 auf, die von der Oberfläche einer kleinen Kugel gebildet wird. Die Meßspitze 18 befindet sich am Ende einer Teleskopstange 19, die in Richtung des Doppelpfeils 20 verfahrbar ist. Die Teleskopstange 19 ist einer Aufnahme 21 gelagert, die um eine horizontale Achse 22 verschwenkbar ist. Die horizontale Achse 22 ist ihrerseits um eine vertikale Achse 23 verschwenkbar.

Beim herkömmlichen und weit verbreiteten Prozeß der Vermessung, Inspektion und Überprüfung eines Bauteils mit einem Koordinatenmeßgerät gemäß Abb. 3 wird ein physisches Bauteil, meist automatisiert, mit einem Meßtaster 17 taktil angetastet, die Ist-Meßwerte werden ermittelt und die Abweichungen zu den Soll-Werten werden im Sinne der Qualitätssicherung bzw. einer Bauteil-Inspektion festgestellt. Dabei werden nur interessierende, wenige Meßpunkte der Objektoberfläche angefahren und die entsprechenden Meßwerte, beispielsweise Lochdurchmesser, Lochposition, bestimmte Funktionsmaße, Abstände etc., ermittelt, nicht aber das gesamte Bauteil erfaßt.

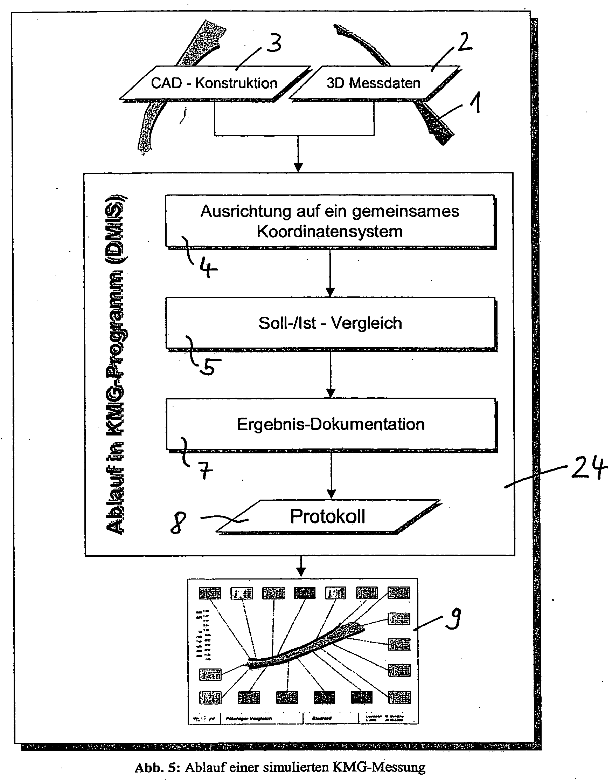

Abb. 5 zeigt den Ablauf einer nach dem erfindungsgemäßen Verfahren durchgeführten Vermessung. Dabei wird ein Bauteil 1 optisch abgetastet, beispielsweise durch einen handgehaltenen Scanner, wodurch die Ist-Meßdaten des Bauteils 1 ermittelt werden, die als 3D-Meßdaten 2 in einem Computer abgespeichert werden. In dem Computer sind ferner die Soll-Daten des Bauteils 1 als CAD-Konstruktion 3 abgespeichert.

Im Schritt 4 werden die 3D-Meßdaten 2 und die CAD-Konstruktion 3 auf ein gemeinsames Koordinatensystem ausgerichtet. Im Schritt 5 wird ein Soll-Ist-Vergleich durchgeführt, bei dem die 3D-Meßdaten 2 mit der CAD-Konstruktion 3 verglichen werden. Die Ergebnisse werden im Schritt 7 dokumentiert. Hierüber wird ein Protokoll 8 erstellt. Die Ergebnisse werden auf einem Bildschirm als Bild 9 ausgegeben.

Die Schritte 4, 5, 7 und 8 werden von einem Meßprogramm 24 für ein Koordinatenmeßgerät gebildet. Durch dieses Meßprogramm 24 werden die Ist-Meßdaten des Bauteils 1 vermessen. Die Meßergebnisse dieser Vermessung werden mit Soll-Daten des Bauteils 1 verglichen.

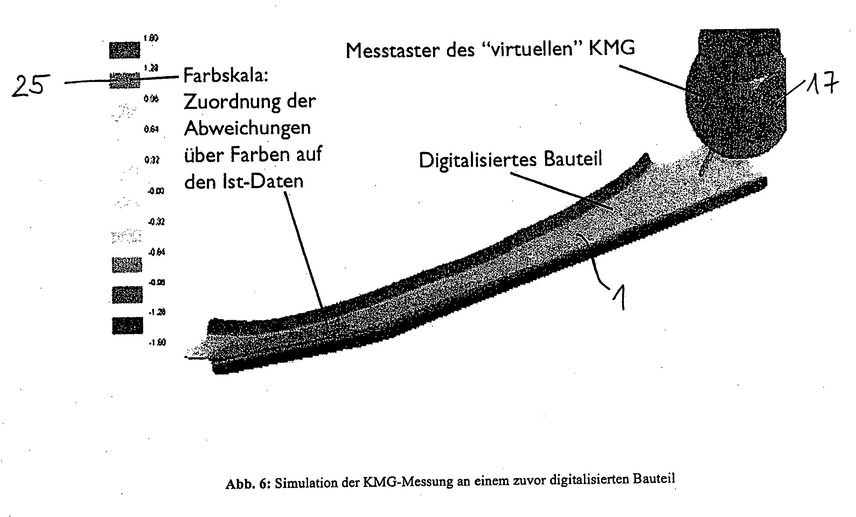

Abb. 6 zeigt eine vergrößerte Darstellung des Bildes 9 der Abb. 1. Das Meßprogramm 24 für ein Koordinatenmeßgerät erzeugt einen virtuellen Meßtaster 17 eines virtuellen Koordinatenmeßgeräts, der das virtuelle, digitalisierte Bauteil 1 vermißt. Die Ergebnisse dieser Messung werden mit den Soll-Daten verglichen. Die Abweichungen werden durch eine Farbskala 25 dargestellt, bei der verschiedenen Abweichungen jeweils verschiedene Farben zugeordnet sind.

Die Erfindung ermöglicht die Realisierung eines Verfahrens und einer Vorrichtung zur virtuellen Vermessung und Inspektion digitalisierter Daten. Durch die Erfindung wird eine Koordinatenmeßgerät-Vermessung eines digitalisierten Bauteils in einer Software ohne physisches Koordinatenmeßgerät ermöglicht, wodurch der derzeit weltweit millionenfach in der Anwendung befindliche Prozeß der Vermessung und der Inspektion mit taktilen Koordinatenmeßgeräten (Koordinatenmeßmaschinen) für die optische Meßtechnik adaptiert werden kann, um damit die Vorteile beider Welten zu vereinen, also die Vorteile der taktilen Meßtechnik und der optischen Meßtechnik. Durch die Erfindung sind verschiedene Vorteile erreichbar, nämlich:
- die Abläufe zum Erstellen eines Meßprogramms können - wie gewohnt - beibehalten werden; lediglich die Art der Vermessung ändert sich (taktil, optisch etc.);
- bereits erstellte Koordinatenmeßgerät-Programme können weiterhin verwendet werden;
- das Verfahren kann unabhängig von der Hardware eines bestimmten Koordinatenmeßgeräts durchgeführt werden; die bedeutet, daß es nicht erforderlich ist, zu überprüfen, ob der Meßtaster des Koordinatenmeßgeräts mit dem Bauteil kollidiert;
- im Hinblick auf die Vorteile der optischen Meßtechnik und ihre zunehmende Verbreitung können Kosten eingespart werden; insbesondere ist durch die Verwendung der optischen Meßtechnik ein hoher Durchsatz möglich; ferner ist es möglich, nicht nur eine Stichproben-Kontrolle durchzuführen, sondern eine hundertprozentige Kontrolle;
- die optische Meßtechnik und die taktile Meßtechnik können gleichermaßen parallel und mit den gleichen Abläufen betrieben werden; dies bedeutet, daß dieselben Meßprogramme sowohl bei Koordinatenmeßgeräten angewendet werden können als auch auf die Daten optisch messender Geräte, wodurch ein vollautomatischer Inspektionsprozeß ermöglicht wird.

Die Simulation der Koordinatenmeßgerät-Messung kann am Bildschirm dargestellt werden, wie in Abb. 5 und 6 gezeigt. Dabei können Endergebnisse, also Abweichungen der Ist-Meßwerte von den Soll-Daten, unmittelbar, beispielsweise durch Farben, dargestellt werden.

Im Rahmen der Erfindung wird ein Verfahren und eine Vorrichtung gemäß Anspruch 1 bzw. Anspruch 12 bereitgestellt. Die Ist-Meßdaten können einzelne oder mehrere kartesische Punkte (z.B. eine 3-D-Punktwolke) sein oder vernetzte kartesische Punkte (z.B. Dreiecksnetze) oder einzelne Scanlinien aus sequentiellen kartesischen Punkten. Die Vermessung der Ist-Meßdaten kann interaktiv am Bildschirm oder automatisiert durchgeführt werden. Zur Automatisierung der Vermessung der Ist-Meßdaten kann das standardisierte Datenformat "DMIS" und/oder das standardisierte Datenformat "l++ DME" verwendet werden. Zur Automatisierung der Vermessung der Ist-Meßdaten können proprietäre Koordinatenmeßgerät-Programme und deren Datenformate verwendet werden. Ferner können proprietäre herstellerspezifische Datenformate verwendet werden, insbesondere die proprietären Datenformate "VW-Meßplan", "Audi-Meßplan" und/oder "BMW-Meßplan". Das Ergebnis der virtuellen Koordinatenmeßgerät-Vermessung der Ist-Meßdaten kann am Bildschirm ausgegeben werden und/oder zur Weiterverarbeitung in eine Datei ausgegeben werden. Das Ergebnis der virtuellen Koordinatenmeßgerät-Vermessung der Ist-Meßdaten kann zur Inspektion direkt gegen Soll-Daten verglichen werden. Die Ergebnisse der Inspektion können in Tabellen-Form und/oder in graphischer Form dargestellt werden. Sie können zur Weiterverarbeitung in einer Datei geschrieben werden.

## Patentansprüche

1. Verfahren zur Überprüfung eines Bauteils, bei dem die Ist-Messdaten des Bauteils mittels einer optischen Abtastung ermittelt werden,
**dadurch gekennzeichnet,**
**daß** die Ist-Meßdaten des Bauteils (1) mittels eines Meßprogramms (24) für ein taktil tastendes Koordinatenmeßgerät vermessen werden, wobei das Meßprogramm (24) einen virtuellen Meßtaster (17) eines virtuellen Koordinatenmeßgeräts erzeugt, der die Ist-Meßdaten des Bauteils vermißt.

2. Verfahren nach Anspruch 1, **dadurch gekennzeichnet, daß** die Ist-Meßdaten als Punktwolke, als vernetzte kartesische Punkte und/oder als Scanlinien vorliegen oder ermittelt werden.

3. Verfahren nach einem der vorhergehenden Ansprüche, **dadurch gekennzeichnet, daß** die Ist-Meßdaten interaktiv vermessen werden.

4. Verfahren nach einem der Ansprüche 1 oder 2, **dadurch gekennzeichnet, daß** die Ist-Meßdaten automatisiert vermessen werden.

5. Verfahren nach einem der vorhergehenden Ansprüche, **dadurch gekennzeichnet, daß** die Ist-Meßdaten mittels eines standardisierten Datenformats vermessen werden.

6. Verfahren nach einem der vorhergehenden Ansprüche, **dadurch gekennzeichnet, daß** Meßergebnissse an einem Bildschirm ausgegeben werden.

7. Verfahren nach einem der vorhergehenden Ansprüche, **dadurch gekennzeichnet, daß** Meßergebnisse in eine Datei ausgegeben werden.

8. Verfahren nach einem der vorhergehenden Ansprüche, **dadurch gekennzeichnet, daß** die Ist-Meßdaten mit Soll-Daten des Bauteils verglichen werden.

9. Verfahren nach Anspruch 8, **dadurch gekennzeichnet, daß** die Vergleichsergebnisse in Tabellenform und/oder in graphischer Form ausgegeben werden.

10. Verfahren nach Anspruch 8 oder 9, **dadurch gekennzeichnet, daß** die Vergleichsergebnisse an einem Bildschirm ausgegeben werden.

11. Verfahren nach einem der Ansprüche 8 bis 10, **dadurch gekennzeichnet, daß** die Vergleichsergebnisse in eine Datei ausgegeben werden.

12. Vorrichtung, eingerichtet zur Durchführung des Verfahrens nach einem der Ansprüche 1 bis 11, mit einem optischen Abtastgerät zum Ermitteln der Ist-Meßdaten des Bauteils (1)
und mit einem Datenverarbeitungsgerät, in dem ein Meßprogramm (24) eines taktil tastenden Koordinatenmeßgeräts zum Vermessen dieser Ist-Meßdaten vorhanden ist, wobei das Meßprogramm (24) einen virtuellen Meßtaster (17) eines virtuellen Koordinatenmeßgeräts erzeugt, der die Ist-Meßdaten des Bauteils vermißt.

13. Vorrichtung nach Anspruch 12, **dadurch gekennzeichnet, daß** das optische Abtastgerät ein Scanner ist.

14. Vorrichtung nach Anspruch 12 oder 13, **dadurch gekennzeichnet, daß** in dem Datenverarbeitungsgerät ein Vergleichsprogramm zum Vergleichen der Ergebnisse des Meßprogramms mit Soll-Daten vorhanden ist.

15. Vorrichtung nach einem der Ansprüche 12 bis 14, **gekennzeichnet durch** einen Bildschirm zum Ausgeben der Meßergebnisse und/oder der Vergleichsergebnisse.

## Claims

1. Method for checking a component, in which the actual measurement data are ascertained by means of an optical scan,
**characterized**
**in that** the actual measurement data of the component (1) are measured using a measurement program (24) for a coordinate measuring machine that probes in tactile fashion, wherein the measurement program (24) generates a virtual measuring stylus (17) of a virtual coordinate measuring machine, which virtual measuring stylus measures the actual measurement data of the component.

2. Method according to Claim 1, **characterized in that** the actual measurement data are present or ascertained as a point cloud, as linked Cartesian points and/or as scan lines.

3. Method according to any of the preceding claims, **characterized in that** the actual measurement data are measured interactively.

4. Method according to either of Claims 1 and 2, **characterized in that** the actual measurement data are measured automatically.

5. Method according to any one of the preceding claims, **characterized in that** the actual measurement data are measured using a standardized data format.

6. Method according to any one of the preceding claims, **characterized in that** the measurement results are output on a screen.

7. Method according to any one of the preceding claims, **characterized in that** the measurement results are output to a file.

8. Method according to any one of the preceding claims, **characterized in that** the actual measurement data are compared to target data of the component.

9. Method according to Claim 8, **characterized in that** the comparison results are output in the form of a table and/or graphically.

10. Method according to Claim 8 or 9, **characterized in that** the comparison results are output on a screen.

11. Method according to any one of Claims 8 to 10, **characterized in that** the comparison results are output to a file.

12. Apparatus, configured to carry out the method according to any one of Claims 1 to 11,
comprising an optical scanning device for ascertaining the actual measurement data of the component (1),
and comprising a data processing device, in which a measurement program (24) of a tactile coordinate measuring machine is included for measuring these actual measurement data, wherein the measurement program (24) generates a virtual measuring stylus (17) of a virtual coordinate measuring machine, which virtual measuring stylus measures the actual measurement data of the component.

13. Apparatus according to Claim 12, **characterized in that** the optical scanning device is a scanner.

14. Apparatus according to Claim 12 or 13, **characterized in that** in the data processing device a comparison program is included for comparing the results of the measurement program with target data.

15. Apparatus according to any one of Claims 12 to 14, **characterized by** a screen for outputting the measurement results and/or the comparison results.

## Revendications

1. Procédé de contrôle d'un composant, avec lequel les données de mesure réelles du composant sont déterminées au moyen d'un balayage optique,
**caractérisé en ce**
**que** les données de mesure réelles du composant (1) sont mesurées au moyen d'un programme de mesure (24) pour un appareil de mesure de coordonnées à balayage tactile, le programme de mesure (24) générant un palpeur de mesure virtuel (17) d'un appareil de mesure de coordonnées virtuel qui mesure les données de mesure réelles du composant.

2. Procédé selon la revendication 1, **caractérisé en ce que** les données de mesure réelles sont présentes ou déterminées sous la forme d'un nuage de points, de ponts cartésiens interconnectés et/ou sous forme de lignes de balayage.

3. Procédé selon l'une des revendications précédentes, **caractérisé en ce que** les données de mesure réelles sont mesurées de manière interactive.

4. Procédé selon l'une des revendications 1 et 2, **caractérisé en ce que** les données de mesure réelles sont mesurées de manière automatisée.

5. Procédé selon l'une des revendications précédentes, **caractérisé en ce que** les données de mesure réelles sont mesurées au moyen d'un format de donnée normalisé.

6. Procédé selon l'une des revendications précédentes, **caractérisé en ce que** les résultats des mesures sont délivrés sur un écran d'affichage.

7. Procédé selon l'une des revendications précédentes, **caractérisé en ce que** les résultats des mesures sont délivrés dans un fichier.

8. Procédé selon l'une des revendications précédentes, **caractérisé en ce que** les données de mesure réelles sont comparées à des données de consigne du composant.

9. Procédé selon la revendication 8, **caractérisé en ce que** les résultats de la comparaison sont délivrés sous forme de tableau et/ou sous forme graphique.

10. Procédé selon la revendication 8 ou 9, **caractérisé en ce que** les résultats de la comparaison sont délivrés sur un écran d'affichage.

11. Procédé selon l'une des revendications 8 à 10, **caractérisé en ce que** les résultats de la comparaison sont délivrés dans un fichier.

12. Dispositif, conçu pour mettre en œuvre un procédé selon l'une des revendications 1 à 11,
comprenant un appareil de balayage optique destiné à déterminer les données de mesure réelles du composant (1)
et comprenant un appareil de traitement de données, dans lequel se trouve un programme de mesure (24) d'un appareil de mesure de coordonnées à balayage tactile servant à mesurer ces données de mesure réelles, le programme de mesure (24) générant un palpeur de mesure virtuel (17) d'un appareil de mesure de coordonnées virtuel qui mesure les données de mesure réelles du composant.

13. Dispositif selon la revendication 12, **caractérisé en ce que** l'appareil de balayage optique est un numériseur.

14. Dispositif selon la revendication 12 ou 13, **caractérisé en ce que** dans l'appareil de traitement de données se trouve un programme de comparaison destiné à comparer les résultats du programme de mesure avec des données de consigne.

15. Dispositif selon l'une des revendications 12 à 14, **caractérisé par** un écran d'affichage destiné à délivrer les résultats des mesures et/ou les résultats de la comparaison.
